# EUROPEAN PATENT SPECIFICATION

(11) **EP 1 545 968 B1**
(45) Date of publication and mention of the grant of the patent: **01.10.2008**
(21) Application number: 03791493.4
(22) Date of filing: 28.08.2003
(51) Int. Cl.: B63B 39/06

(54) **VESSEL PROVIDED WITH A FOIL SITUATED BELOW THE WATERLINE**
SCHIFF MIT EINER SICH UNTER DER WASSERLINIE ERSTRECKENDEM BLATT
CANOT AVEC PROFIL HYDRODYNAMIQUE SITUE SOUS LA LIGNE DE FLOTTAISON

(30) Priority: 28.08.2002 NL 1021346
(43) Date of publication of application: 29.06.2005
(73) Proprietor: Van Oossanen & Associates B.V., 6705 BB Wageningen (NL)
(72) Inventor: VAN OOSSANEN, Pieter, NL-6705 BB Wageningen (NL)
(74) Representative: van Westenbrugge, Andries
(86) International application number: PCT/NL2003/000602
(87) International publication number: WO 2004/020276

(56) References cited:
- FR-A- 1 541 693
- US-A- 1 852 680
- US-A- 2 832 304
- US-A- 3 208 422
- US-A- 4 628 853
- PATENT ABSTRACTS OF JAPAN vol. 011, no. 180 (M-597), 10 June 1987 (1987-06-10) & JP 62 008893 A (MITSUBISHI HEAVY IND LTD), 16 January 1987 (1987-01-16)

## Description

The present invention relates to a vessel with a single hull, the aft part of which has a lower water displacement and less breadth lying in the water than the middle part, and provided with a foil extending below the waterline.

Such a vessel is known in the prior art. In particular, planing vessels are sometimes provided near the end with a foil or flap extending below the hull, in order to ensure that during planing the trim angle that the hull forms with the surface of the water is limited. Such planing vessels generally have a hull that does not change substantially from the middle part in the aft direction.

An example of such a construction is found in US 2,832,304, 4915048 and the Abstract of Japanese Patent Application 62008893. In these cases the foil is situated on the aft side of the vessel, and a downward force is generated. Such vessels have no constriction of the submerged part of the vessel, in other words the cross section of the submerged part of the vessel (perpendicular to the direction of movement of the vessel) does not decrease in the aft direction.

Furthermore, some catamarans are provided with fins for the purpose of reducing ship movements in waves. Such fins do not, however, have a foil profile. An example of the use of these fins in a boat is found in US-A-3.2108.422.

The closest state of the art is considered to be the document FR 1 541 693, which discloses a vessel that has foils at the aft section to improve the hydrodynamic behaviour of the vessel by providing a hydrodynamic lift.

The present invention relates to a non-planing vessel such as a sailing boat or a motor-driven vessel. It can be a relatively small vessel such as a leisure vessel or a large vessel such as a tanker, container ship and the like. Such vessels are provided with a constriction, in other words the cross-sectional surface area decreases in the longitudinal direction of the vessel, viewed in the aft direction. Such a reduction of the cross-sectional surface area is at least one third, and is normally approximately 50% from the point with the largest cross-sectional surface area of the submerged part of the vessel to the point with the smallest cross-sectional surface area of the submerged part of the vessel. At the position of a constriction the flow of the water will be directed upwards and/or inwards.

More particularly, in the case of such vessels the transom is not submerged in the water, but lies above the waterline.

It is the object of the present invention to improve the sailing characteristics of such a vessel.

This aim is realised in a vessel of the type described above having the characterising features of claim 1.

The terms length, breadth etc. are used in this description. These terms are associated with the position of the vessel in the water while it is being propelled in the usual direction. The direction of propulsion is the longitudinal direction in this case.

According to the present invention, a foil (profile) is provided near the place where the greatest flow deflection occurs. This foil is arranged in such a way that, apart from an upward lifting force, a forward propulsion force is provided. This propulsion force manifests itself by faster travel in the same conditions or by reduced fuel consumption, or by both of these.

According to an advantageous embodiment of the invention, the distance from the foil to the hull is substantially constant over its full breadth. In other words, the foil follows the shape of the hull precisely at a distance that does not vary.

The foil preferably extends over the greatest possible part of the "breadth" of the hull. In practice, this means that in the normal vertical position of the vessel the foil extends until close to the waterline.

It will be understood that this does not necessarily have to be the case in relatively broad vessels such as some types of merchant vessels, for example large oil tankers or container ships. The fact is that in these cases the length of the foil below the hull is already such that the part of it extending to the waterline would make only a small contribution to the effect described above.

The breadth of the foil is, however, important in the case of smaller vessels such as sailing vessels.

Unlike the structure in the prior art, where the foil is used during planing and in that case can be moved between a position for planing and an ordinary sailing position, according to an advantageous embodiment of the invention, the foil according to the present invention is arranged immovably on the hull, and the.distance from and orientation in relation to the hull is invariable.

According to an advantageous embodiment of the invention, the length of the foil, in other words the size in the longitudinal direction of movement of the vessel, is at least 50% of the distance from the hull and is no more than 150% of said distance.

The length of the profile decreases in the outward direction from the longitudinal axis of the vessel. The rear edge preferably tapers off.

In experiments it was found that the overall hydrodynamic resistance of a vessel can be reduced with the foil used above. It was also found that the stem wave of the vessel concerned is reduced, which results in a further restriction of the resistance. These effects are greater than the resistance encountered by the foil through the water, so that a net positive result remains. Furthermore, it is possible to limit the trim of a vessel with the foil.

The invention will be explained in greater detail below with reference to an exemplary embodiment illustrated in the drawing, in which:
Fig. 1 shows diagrammatically in side view a vessel according to the present invention;
Fig. 2 shows the vessel according to Fig. 1 in top view; and
Fig. 3 shows the vessel in rear view.

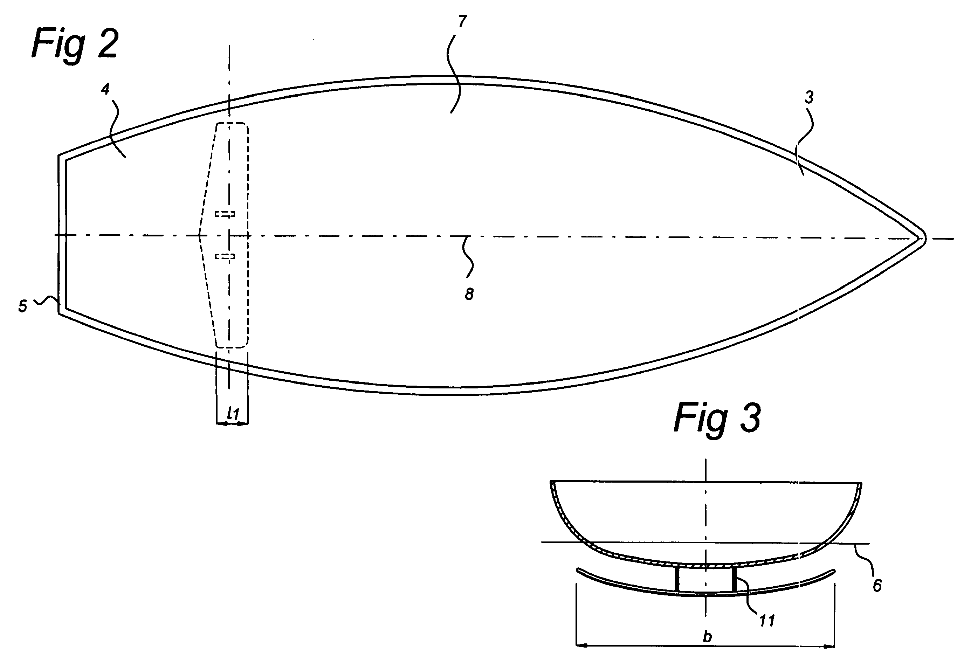

The vessel according to the present invention is indicated in its entirety by 1. It comprises a hull 2 which, as can be seen from Fig. 2, is provided with a fore part 3, which broadens out increasingly in the direction of movement of the vessel. Connected to it is a middle part 7 of substantially constant breadth, and following that a tapering aft part 4. A considerable flow deflection occurs at the transition between part 7 and part 4.

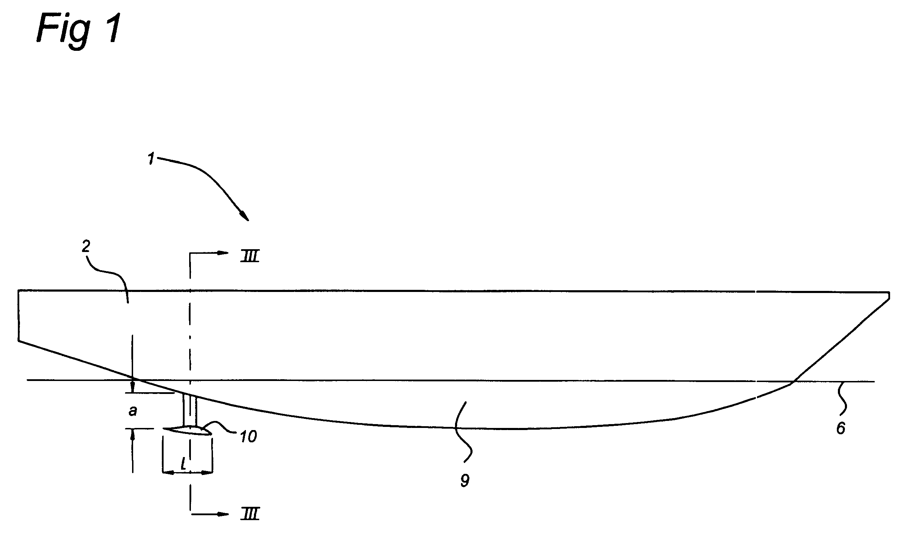

As can be seen from Fig. 1, the aft end of the vessel sometimes projects above the waterline.

The longitudinal axis of the vessel is indicated by 8. A foil is fitted under the vessel. This foil is fixed in an immovable manner on the vessel by means of supports 11. The distance between the foil 10 and the hull 2 is constant and amounts to a. The length 1 at the position of the axis 8 is preferably approximately equal to the distance a. The length 1 of the foil decreases from the longitudinal axis 8 to the sides of the vessel, as can be seen from Fig. 2. The longest length is indicated by L in Fig. 1, while the shortest length is indicated by L₁ in Fig. 2. This reduction of the length is obtained owing to the fact that the rear side of the foil tapers. The breadth b of the foil is preferably at least three times, and more particularly at least four times, the length L of said foil.

As can be seen from Fig. 1, the profile is of such a shape that it causes a lifting force to be produced by the local flow rate at that point. Owing to the fact that the local flow is directed obliquely upwards (and backwards), this lifting force is not directed purely vertically, but slightly forward. The resultants arising from this have a component in the forward direction.

The foil can be made of any material known in the art. This material depends on the application. For competition boats it will be a light material, such as a material impregnated with carbon fibres. In the case of freight ships the material used will be steel or aluminium. A reduction in resistance of over 5% was found during experiments.

After reading the above, persons skilled in the art will immediately think of variants that are obvious after the above. These variants are considered to lie within the scope of the appended claims.

## Claims

1. Vessel (1) with a single hull (2), the aft part (4) of which has a smaller water displacement and less breadth lying in the water than the middle part (7), and provided with a foil (10) extending below the waterline, wherein said foil (10) extends substantially transversely to the longitudinal axis (8) of said vessel, at the position of the greatest flow constriction of said vessel caused by said reducing water displacement, lying at a distance (a) below the hull over a breadth (b) comprising at least half the breadth of said hull at the position of the greatest flow deflection of said vessel caused by said reducing water displacement, **characterized in that** said foil is designed in such a way that during the forward movement of the vessel it exerts a forward propulsion force on said vessel, **in that** the local flow is directed obliquely upwards (and backwards), a lifting force being present being not directed purely vertically but slightly forward of which the resultants have a component in the forward direction

2. Vessel according to Claim 1, in which the distance of said foil from said hull is substantially constant over the entire breadth.

3. Vessel according to one of the preceding claims, in which said foil extends to the waterline (6).

4. Vessel according to one of the preceding claims, in which the position of said foil relative to said hull is fixed.

5. Vessel according to one of the preceding claims, in which the length (L) of said foil is at least 50% of the distance (a) of said foil from the hull.

6. Vessel according to one of the preceding claims, in which the length of said foil decreases in the outward direction from the longitudinal axis (L₁).

## Patentansprüche

1. Schiff (1) mit einfachem Rumpf (2), dessen Achterteil (4) eine geringere Wasserverdrängung und eine geringere im Wasser liegende Breite aufweist als der Mittelteil (7) und mit einem Blatt (10) versehen ist, die sich unterhalb der Wasserlinie erstreckt, wobei sich das Blatt (10) im Wesentlichen quer zur Längsachse (8) des Schiffes an der Position der größten Strömungseinschnürung des Schiffes, die durch die sich verringernde Wasserverdrängung verursacht wird, erstreckt und in einem Abstand (a) unterhalb des Rumpfes über eine Breite (b) liegt, die mindestens die Hälfte der Breite des Rumpfes an der Position der größten Strömungsablenkung, die durch die sich verringernde Wasserverdrängung Wasserverdrängung verursacht wird, umfasst, **dadurch gekennzeichnet, dass** das Blatt so ausgelegt ist, dass sie während der Vorwärtsbewegung des Schiffes eine Vorwärtsantriebskraft auf das Schiff ausübt, dass die lokale Strömung schräg nach oben (und hinten) gerichtet ist, wobei eine vorhandene Hubkraft nicht rein vertikal, sondern leicht vorwärts gerichtet ist, wobei die Resultanten eine Komponente in der Vorwärtsrichtung aufweisen.

2. Schiff nach Anspruch 1, wobei der Abstand des Blattes von dem Rumpf über die gesamte Breite im Wesentlichen konstant ist.

3. Schiff nach einem der vorhergehenden Ansprüche, wobei sich das blatt zu der Wasserlinie (6) erstreckt.

4. Schiff nach einem der vorhergehenden Ansprüche, wobei die Position des Blatt relativ zu dem Rumpf fest ist.

5. Schiff nach einem der vorhergehenden Ansprüche, wobei die Länge (L) des Blattes mindestens 50% des Abstands (a) des Blattes von dem Rumpf beträgt.

6. Schiff nach einem der vorhergehenden Ansprüche, wobei die Länge des Blattes von der Längsachse (L₁) in die Richtung nach außen abnimmt.

## Revendications

1. Bateau (1) ayant une coque simple (2), dont la partie arrière (4) présente un déplacement d'eau plus faible et une largeur reposant dans l'eau plus petite que la partie intermédiaire (7), et doté d'un profil hydrodynamique (10) s'étendant en dessous de la ligne de flottaison, dans lequel ledit profil hydrodynamique (10) s'étend sensiblement transversalement par rapport à l'axe longitudinal (8) dudit bateau, à la position de la plus grande constriction de flux dudit bateau causée par ledit déplacement d'eau en diminution, se trouvant à une distance (a) en dessous de la coque sur une largeur (b) comprenant au moins la moitié de la largeur de ladite coque à la position de la plus grande déflexion de flux dudit bateau causée par ledit déplacement d'eau en diminution, **caractérisé en ce que** ledit profil hydrodynamique est conçu de telle sorte que pendant le mouvement vers l'avant du bateau, il exerce une force de propulsion vers l'avant sur ledit bateau, **en ce que** le flux local est dirigé obliquement vers le haut (et vers l'arrière), une force de levage présente n'étant pas dirigée de façon purement verticale mais légèrement vers l'avant dont les résultantes ont une composante dans la direction avant.

2. Bateau selon la revendication 1, dans lequel la distance dudit profil hydrodynamique par rapport à ladite coque est sensiblement constante sur l'ensemble de la largeur.

3. Bateau selon l'une quelconque des revendications précédentes, dans lequel ledit profil hydrodynamique s'étend vers la ligne de flottaison (6).

4. Bateau selon l'une des revendications précédentes, dans lequel la position dudit profil hydrodynamique par rapport à ladite coque est fixe.

5. Bateau selon l'une des revendications précédentes, dans lequel la longueur (L) dudit profil hydrodynamique est d'au moins 50 % de la distance (a) dudit profil hydrodynamique par rapport à la coque.

6. Bateau selon l'une des revendications précédentes, dans lequel la longueur dudit profil hydrodynamique diminue dans la direction vers l'extérieur par rapport à l'axe longitudinal (L₁).
